# EUROPÄISCHE PATENTSCHRIFT

(11) **EP 0 985 857 B1**
(45) Veröffentlichungstag und Bekanntmachung des Hinweises auf die Patenterteilung: **06.11.2002**
(21) Anmeldenummer: 99115728.0
(22) Anmeldetag: 10.08.1999
(51) Int. Cl.: F16H 61/24

(54) **Rastierhülse für eine Schaltwelle**
Detent-receiving sleeve for a shift shaft
Manchon d'immobilisation d'un arbre de commande

(30) Priorität: 07.09.1998 DE 19840680
(43) Veröffentlichungstag der Anmeldung: 15.03.2000
(73) Patentinhaber: INA-Schaeffler KG, 91074 Herzogenaurach (DE)
(72) Erfinder: Schnapp, Peter, 90431 Nürnberg (DE)

(56) Entgegenhaltungen:
- EP-A- 0 974 777
- WO-A-96/03684
- DE-A- 4 307 596

## Beschreibung

### Anwendungsgebeit der Erfindung mit den Merkmalen des Oberbegrifts von Anspruche 1 bzw. 2.

Die Erfindung betrifft eine Rastierhülse mit den Merkmalen des Oberbegriffs von Anspruch 1 bzw. 2.

### Hintergrund der Erfindung

Zur Gestaltung von Rastierhülsen, die drehstarr mit der Schaltwelle verbunden sind, werden verschiedene Lösungsansätze vorgeschlagen.

Die gattungsgemäße WO-A-96/036 84 offenbart eine Rastierhülse, deren Einzelteile jeweils spanlos durch ein Tiefziehverfahren hergestellt sind. Dabei ist die Rastierhülse über eine Hülse drehfest auf der Schaltwelle befestigt. An einem Ende der Hülse ist eine Scheibe unlösbar befestigt, die von einem Topfteil umschlossen und an dessen Innenwandung befestigt ist. Durch einen axialen Versatz des Bodens zum Topfteil stellt sich eine radial gestufte Rastierhülse ein. In den Außenumfang, d. h. die Mantelfläche des Topfteils sind Rastausnehmungen eingeformt, die auch als Übertragungselemente zu bezeichnen sind und die für eine separat zur Schaltwelle angeordnete Schaltarretierung bestimmt sind. Die gerundeten Rastausnehmungen sind dabei der Formgebung einer Rastkugel angepaßt, mit der die Schaltarretierung am Topfteil der Rastierhülse federnd abgestützt ist.

Ein mehrteiliger Aufbau einer Kugelraste, die ebenfalls im Zusammenhang mit einer Rastierhülse zu betrachten ist, kann der DE 38 08 375 C1 entnommen werden. Diese bekannte Kugelraste ist mit einem geteilten Gehäuse versehen und umfaßt em erstes innere Teil, welches als Tiefziehteil gestaltet und von einer Hohlschraube umgeben ist. Das Führungsteil ist massiv ausgebildet und umfaßt einstückig eine Kugelschale. Zwischen dem Führungsteil und dem Gehäuse sind Wälzkörper angeordnet, die in einem Gehäuse geführt sind. Zur Sicherung des Führungsteils im Gehäuse ist dieses mit einem radial nach innen umgebördelten Rand versehen.

Eine weitere Rastierhülse ist aus der DE 40 38 494 A1 bekannt. Derartige Hülsen werden vorzugsweise spanlos durch ein Tiefziehverfahren hergestellt. Derartige Blechziehteile fordern aufwendige, komplizierte Werkzeuge. Andererseits ist ein mehrstufiges Tiefziehverfahren erforderlich, ggf. mit einer Zwischenbehandlung, was die Herstellkosten erhöht.

### Aufgabe der Erfindung

Ausgehend von obigen bekannten Lösungen ist es Aufgabe der Erfindung, einen Aufbau für das Topfteil der Rastierhülse zu schaffen, mit dem die Herstellkosten und das Gewicht reduziert werden können.

### Zusammenfassung der Erfindung

Die zuvor genannte Problemstellung wird erfindungsgemäß durch die Merkmale der Ansprüche 1 und 2 gelöst.

Gemäß Anspruch 1 umfasst die Rastierhülse ein aus einem Bandmaterial gefertigtes einteiliges Topfteil. Dazu ist das Bandmaterial weitesgehend zylindrisch gerollt, deren Enden in Richtung einer Längsachse der Rastierhülse verlaufenden Trennebene zusammengefügt sind. Für ein derartig gestaltetes Topfteil bietet es sich an, das Bandmaterial zunächst mit allen erforderlichen Übertragungselementen, wie beispielsweise Schaltfinger, Schaltgasse, Rastkontur, Anschlagnocken zu versehen, die eingeformt bzw. angebracht werden, bevor das Bandmaterial gerollt und an den Enden zusammengefügt wird. Eine solche Herstellung des Topfteils optimiert die Erstellungskosten der Rastierhülse.

Das Topfteil gemäß Anspruch 2 umfasst zumindest zwei Bauteile, die in einem Trennbereich bzw. einer Trennebene miteinander verbunden sind. Gleichfalls ermöglicht ein kompliziert gestaltetes, mehrteiliges Topfteil gleichzeitig einen Gewichtsvorteil. Die Herstellung der Einzelteile des Topfteils erfordern weiterhin keine aufwendigen kostenintensiven Werkzeuge. Der erfindungsgemäße zumindest zweiteilige Aufbau des Topfteils vermeidet außerdem ein mehrstufiges kostenintensives spanloses Ziehverfahren mit einer dabei erforderlichen Zwischenwärmebehandlung. Weiterhin bietet es sich an, vorgefertigte Einzelteile des Topfteils bereits mit einer Rastkontur, und/oder einer Schaltgasse sowie einer beliebigen Profilierung oder mit Übertragungselementen zu versehen.

Die Erfindungen gemäß den Ansprüchen 1 und 2 ermöglichen eine kostengünstige Herstellung der multifunktionalen Rastierhülse. Das einteilige oder mehrteilige Topfteil sowie alle zugehörigen Bauteile der Rastierhülse einschließlich der Übertragungselemente können dabei durch unterschiedliche Fertigungstechniken bzw. Fertigungsverfahren hergestellt werden. Zur Herstellung der Einzelteile sind dazu Fertigungstechniken einsetzbar, die optimal auf die jeweils erforderliche Funktion abgestimmt werden können.Weiterhin ist keine einheitliche Werkstoffwahl für die Einzelteile der erfindungsgemäßen Rastierhülse erforderlich.

Weitere Ausgestaltungen der Erfindungen sind Gegenstand der Ansprüche 3 bis 14.

Für eine formschlüssige Verbindung der Enden eines aus Bandmaterial geformten Topfteils bietet es sich vorteilhaft an, ein Ende des Topfteils mit zumindest einem Hinterschneidungen aufweisenden, vorstehenden Ansatz zu versehen. Dieser Ansatz ist in einer der Formgebung des Ansatzes entsprechenden Ausnehmung des zugehörigen weiteren Endes vom Bandmaterial formschlüssig. gehalten. Zur Sicherung dieser formschlüssigen Verbindung bietet es sich beispielsweise an, den Ansatz mit der Ausnehmung zu verstemmen.

Für das erfindungsgemäß mehrteilig gestaltete Topfteil sind bevorzugt Trennebenen vorgesehen, die in Richtung der Längsachse von der Rastierhülse bzw. der Schaltwelle verllaufen. Diese Trennlinienverläufe sind bevorzugt für eine aus zwei Halbschalen zusammengesetzte Topfhülse geeignet.

Eine weitere Ausgestaltung eines zweiteilig gestalteten Topfteils umfaßt Abschnitte, die in axialer Richtung hintereinander angeordnet sind, wobei deren Trennebene rechtwinkelig zur Längsachse der Rastierhülse verläuft. Dieser Aufbau eignet sich beispielsweise für spanlos als Tiefziehteil gestaltete Abschnitte bzw. Segmente mit voneinander abweichenden geometrischen Formen. Beispielsweise kann ein erster Abschnitt mit einer Schaltgasse versehen sein und der zugehörige zweite Abschnitt mit einer Rastkontur, in die ein benachbart zur Rastierhülse und der Schaltwelle angeordnetes Arretierelement formschlüssig eingreift. Zur Befestigung der Segmente bzw. Abschnitte im Bereich der Trennebene ist vorzugsweise eine unlösbare Verbindung z. B. eine Schweißung oder Lötung vorgesehen.

Die erfindungsgemäße Rastierhülse schließt ein Topfteil ein, dessen Aufbau eine kostengünstige Anordnung aller erforderlichen Übertragungselemente vorsieht. Beispielsweise kann das Topfteil mit einem separaten, radial aus der Mantelfläche des Topfteils ausgerichteten Übertragungselement, einem Schaltfinger versehen sein, der vorzugsweise in eine Bohrung eingepaßt und unlösbar durch eine Schweißung oder Lötung an dem Topfteil befestigt ist. Zusätzlich oder alternativ ist am Topfteil ein Anschlagnocken angeordnet, der mit einer separat zur Schaltwelle angeordneten Sperreinheit zusammenwirkt. Für Rastierhülsen, auf denen eine Sperreinheit unmittelbar befestigt ist, bietet es sich an, das Topfteil mit einer Achse zu versehen, auf der eine Sperrklinke drehbar angeordnet ist.

Die Mantelfläche des Topfteils kann weiterhin mit einem als Schaltfinger ausgebildeten Übertragungselement versehen sein, der beispielsweise in eine der Schaltwelle benachbarten Schaltkulisse oder Schaltführung eingereift. Ebenfalls eignet sich das Topfteil der Rastierhülse zur Aufnahme einer als Rückwärtsgangsperre ausgebildeten Sperrklinke, die auf einer Achse drehbar angeordnet ist. Für Rastierhülsen, die mit einer getrennt zur Schaltwelle angeordneten Schaltarretierung zusammenwirken, ist vorzugsweise die Mantelfläche des Topfteils mit einer Rastausnehmung oder einer Rampe versehen. Alternativ oder ergänzend kann das Topfteil eine für Schaltelemente bestimmte Schaltführung aufweisen.

Die Rastierhülse kann gemäß der Erfindung weiterhin mit einem separaten, das Topfteil koaxial umschließenden Rastierring versehen sein, der drehstarr an dem Topfteil befestigt ist. Ein solcher radial die Mantelfläche des Topfteils überragender, separater Rastierring bietet einen Kostenvorteil gegenüber einer einteiligen Lösung, die ein mehrstuftiges Ziehverfahren oder ein massives Topfteil erfordert.

Zur Erzielung einer formschlüssigen, drehstarren Verbindung zwischen dem Rastierring und dem Topfteil ist vorzugsweise eine Verzahnung oder eine beliebige Profilierung vorgesehen. Durch eine entsprechende Toleranzwahl und zur Erzielung einer kraftformschlüssigen Verbindung kann der Rastierring weiterhin über einen Preßsitz an dem Topfteil befestigt werden. Alternativ schließt die Erfindung weiterhin eine Klebung oder eine Schweißung ein, mit der eine unlösbare Verbindung zwischen dem Rastierring und dem Topfteil geschaffen wird. Der Rastierring kann außerdem durch ein Verprägen, Nieten oder mittels Reibschluß mit dem Topfteil verbunden werden.

Die Erfindung ist nicht beschränkt auf die zuvor erläuterten Ausführungen und Fertigungsverfahren des Topfteils der Rastierhülse, sondern schließt alle dem Fachmann bekannten spanlosen Formgebungen ein, z. B. ein hydraulisches Aufweiten eines Rohrkörpers.

### Kurze Beschreibung der Zeichnungen

Die Erfindung wird anhand einiger Ausführungsbeispiele in der nachfolgenden Figurenbeschreibung erläutert. Es zeigen:
- Figur 1: eine Rastierhülse in einer Ansicht;
- Figur 2: eine zu Figur 1 alternativ gestaltete Rastierhülse;
- Figur 3: einen Längsschnitt der Rastierhülse gemäß Figur 2;
- Figur 4: eine Rastierhülse in einem Längsschnitt, bei der das Topfteil die Hülse vollständig umschließt;
- Figur 5: eine weitere im Längsschnitt abgebildete Rastierhülse, deren Topfteil mit einem separaten Rastierring versehen ist;
- Figur 6: einen Querschnitt, der in Figur 2 abgebildeten Rastierhülse entlang der Linie VI-VI;
- Figur 7: den Einbau einer Rastierhülse in einem Schaltgetriebe.

### Ausführliche Beschreibung der Zeichnungen

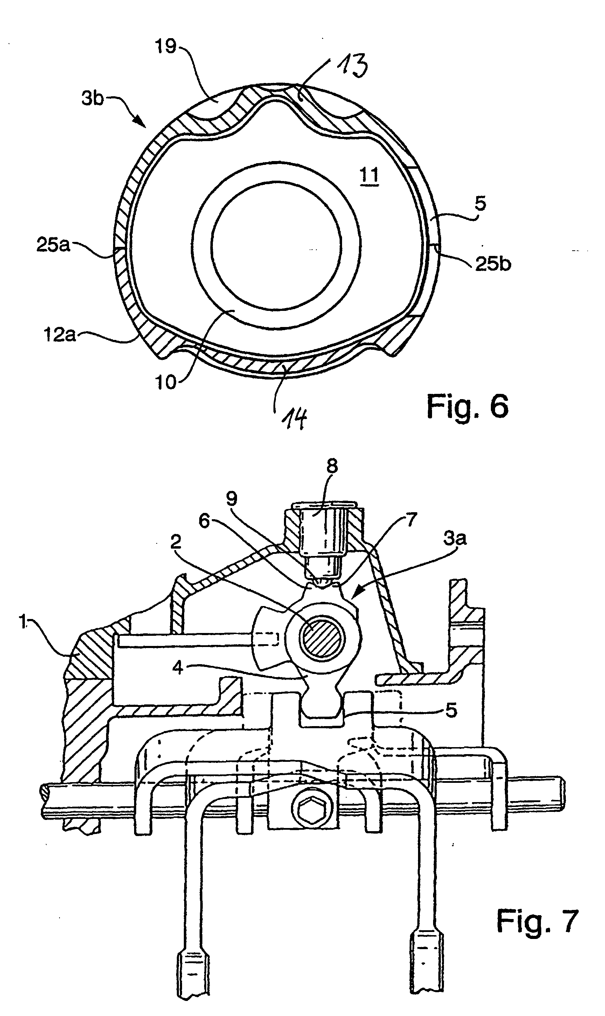

Zur Darstellung des Gesamtzusammenhanges der Erfindung sei zunächst auf die Figur 7 verwiesen, die einen Ausschnitt einer Getriebeschaltung zeigt. In einem Getriebegehäuse 1 eines mechanisch schaltbaren Zahnräderwechselgetriebes ist eine Schaltwelle 2 in Lagern axial verschiebbar und schwenkbar angeordnet. Auf der Schaltwelle 2 ist eine Rastierhülse 3 drehstarr angeordnet, die mit mehreren radial ausgerichteten, winkelversetzt angeordneten Übertragungselementen versehen ist. Ein Schaltfinger 4 ist dabei als erstes Übertragungselement vorgesehen, der in eine Schaltführung 5 formschlüssig eingreift. Zur Übertragung einer Schaltbewegung vom manuell zu betätigenden, in Figur 7 nicht abgebildeten Schalthebel wird der Schaltfinger 4 gemeinsam mit der Schaltwelle 2 zur Vorwahl von Schaltgassen verdreht und zum Einlegen von Gängen axial verschoben. Als zweites Übertragungselement verfügt die Rastierhülse 3 über eine Rastierung 6, in deren Rastausnehmung 7 eine Rastkugel 9 eingreift. Dabei ist die Rastkugel 9 federnd in einer Schaltarretierung 8 eingesetzt, die ortsfest in dem Getriebegehäuse 1 angeordnet ist. Die Rastierung 6 besitzt dabei zwei parallel verlaufende Rastausnehmungen 7, die sich über eine größere axiale Länge erstrecken. Damit ist sichergestellt, daß die Schaltwelle 2 in allen Winkellagen und Schaltstellungen exakt positioniert ist. Bei einer Verdrehung der Schaltwelle 2 kann die Rastkugel 9 den Sitz der Rastausnehmung 7 verlassen und verrastet selbsttätig in die benachbarte Rastausnehmung bei einer entsprechenden übereinstimmenden Lage.

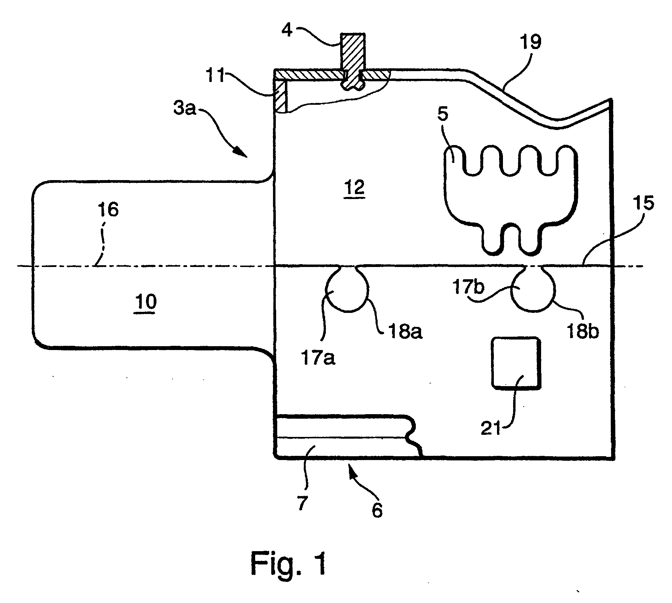

Die Figur 1 zeigt die Rastierhülse 3a als Einzelteil, die eine Hülse 10 umfaßt, an der sich an einem Ende eine Scheibe 11 anschließt, die von einem Topfteil 12 umschlossen ist. Diese Einzelteile können vorgefertigt und zu einer Einheit zusammengefügt werden. Die Rastierhülse 3a ist im eingebauten Zustand über die Hülse 10 drehfest auf der Schaltwelle 2 befestigt. Das Topfteil 12 steht mit Bauteilen in einer Wirkverbindung, die der Schaltwelle 2 nebengeordnet sind.

Alternativ dazu bietet es sich an, das Topfteil 12 einteilig zu gestalten und dazu ein Bandmaterial zu verwenden, welches an den Enden im Bereich der Trennebene 15 zusammengefügt wird. Die Erfindung schließt dabei ebenfalls eine formschlüssige lösbare Verbindung dieser Enden vor. Dazu ist ein Ende des Bandmaterials mit zwei vorstehenden Hinterschneidungen bildenden Ansätzen 17a, 17b versehen, die in zugehörige Ausnehmungen 18a, 18b des gegenüberliegenden Bandendes formschlüssig eingreifen. Zur Sicherung dieser Verbindung bietet es sich beispielsweise an, eine Verstemmung zwischen den Ansätzen 17a, 17b und den Ausnehmungen 18a, 18b vorzusehen. Die Mantelfläche des Topfteils 12 sieht unterschiedliche Übertragungselemente vor. Der Schaltfinger 4 ist mit einem durchmesserreduzierten zylindrischen Abschnitt in eine Bohrung des Topfteils 12 eingesetzt und gegenseitig verstemmt. Axial versetzt zum Schaltfinger 4 ist das Topfteil 12 mit einer als Rampe 19 gestalteten Einschnürung versehen, deren Flanken unterschiedliche Anstellwinkel aufweisen. Die umfangsbegrenzt im Segment 13 angeordnete Rampe 19 steht beispielsweise mit einem Übertragungshebel der Schaltung in Verbindung. Das Segment 13 ist weiterhin mit einer kammartig gestalteten Schaltführung 5 versehen, die in einem abgeflachten Bereich des Topfteils 12 eingebracht ist. Das untere Segment 14 ist an der zur Hülse 10 gerichteten Seite mit in Richtung der Längsachse 16 ausgerichteten, parallel verlaufenden Rastausnehmungen 7 versehen, für die Schaltarretierung 8 (gemäß Figur 6). Weiterhin verfügt das Segment 14 über einen Anschlagnocken 21, der beispielsweise mit einem Sperrglied einer separat angeordneten Rückwärtsgangsperre zusammenwirkt.

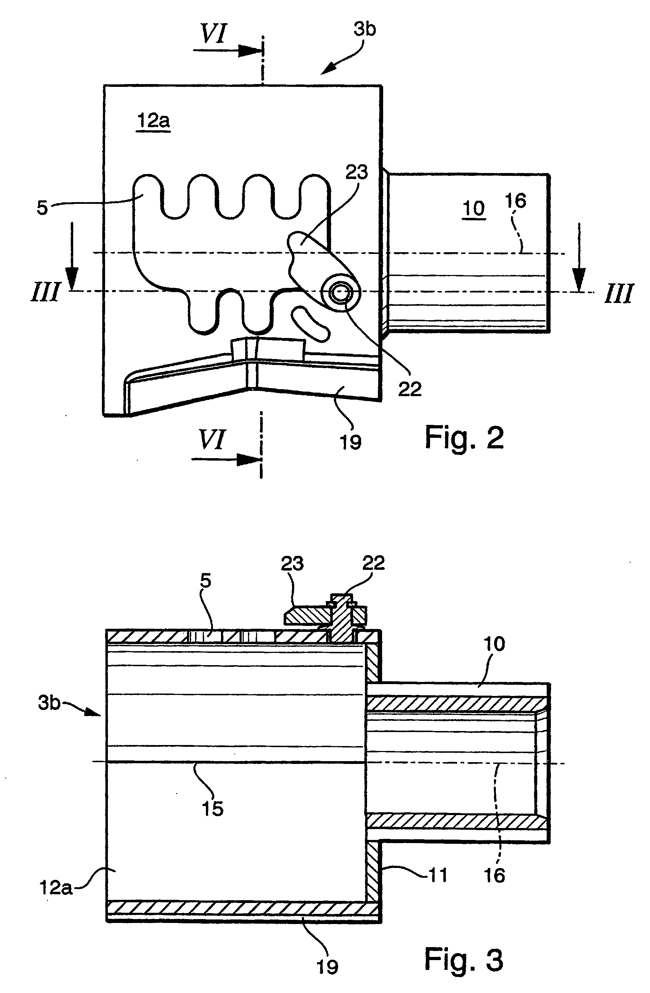

Die in den Figuren 2 und 3 abgebildete Rastierhülse 3b ist abweichend von der Rastierhülse 3a mit einer radial aus dem Topfteil 12a ragenden Achse 22 zur Aufnahme einer Sperrklinke 23 versehen. Die schwenkbar federnd abgestützte Sperrklinke 23 ragt in die Schaltführung 5 und dient als eine Rückwärtsgangsperre zur Vermeidung einer Fehlschaltung. Die Schnittansicht der Rastierhülse 3b gemäß Figur 3 zeigt die in eine Bohrung des Topfteils 12a eingesetzte Achse 22. Weiterhin verdeutlicht die Schnittdarstellung die Ausbildung der drei Einzelteile der Rastierhülse 3b. Die axial zueinander versetzten, eine radiale Stufe bildenden Bauteile, die Hülse 10 sowie das Topfteil 12a sind über die Scheibe 11 verbunden und jeweils unlösbar beispielsweise durch eine Schweißung zusammengefügt. Das Topfteil 12a ist vorzugsweise durch Rollen eines Bandmaterials hergestellt, deren Enden im Bereich der Trennebene 15 zusammengefügt sind.

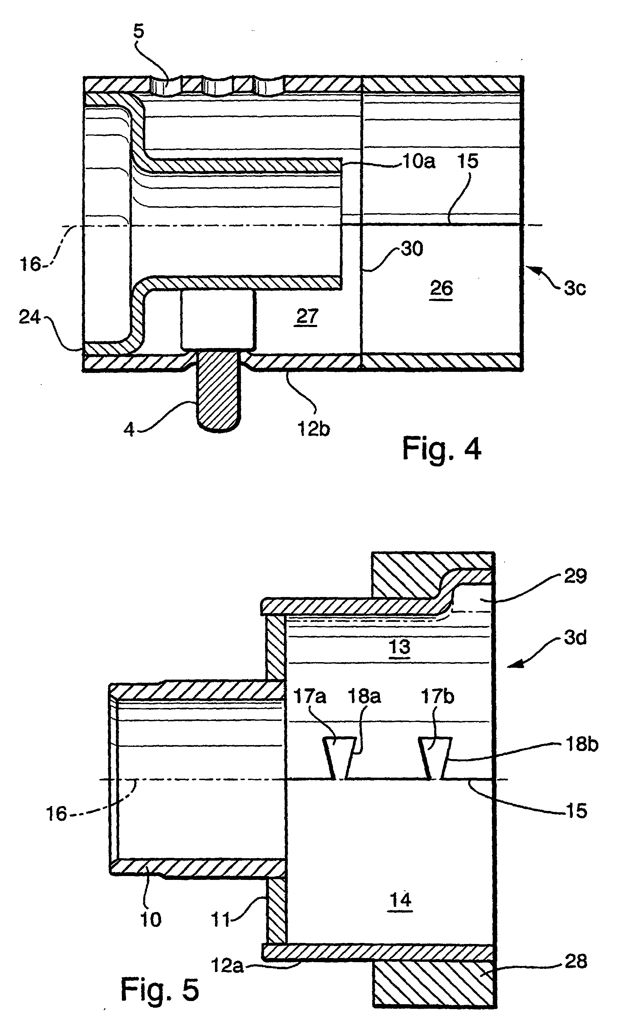

Die Rastierhülse 3c gemäß Figur 4 ist mit einer Hülse 10a versehen, die vollständig innerhalb des Topfteils 12b integriert ist. Dazu beinhaltet die Hülse 10a gleichzeitig einen scheibenartigen Abschnitt, der endseitig übergeht in einen zylindrischen Bord 24, der sich an der Innenwandung des Topfteils 12 abstützt und mit diesem unlösbar verbunden ist. Dieser Aufbau verringert den erforderlichen axialen Bauraum der Rastierhülse 3c. Das Topfteil 12b wird gemäß Figur 4 durch zwei rohrförmig gestaltete Abschnitte 26, 27 gebildet. Diese Bauteile sind im Bereich einer rechtwinkelig zur Längsachse 16 verlaufenden Trennebene 30 zusammengefügt.

Die Figur 5 zeigt ein zu Figur 1 alternativ gestaltetes Topfteil 12. Zur Fertigungsvereinfachung ist das Topfteil 12 zweiteilig und umfaßt die Segmente 13 und 14 mit einer vorzugsweise halbschalenförmigen Formteilung. Die Trennebene 15 der Segmente 13, 14 verläuft dabei in Richtung einer Längsachse 16 der Rastierhülse 3a. Zur Verbindung der Segmente 13, 14 sind diese Bauteile durch eine Schweißung oder eine beliebige andere unlösbare Verbindung im Bereich der Trennebene 15 verbunden. Bei Bedarf kann auch eine formschlüssige Verbindung zwischen den Segmenten 13 und 14 des Topfteils 12 vorgesehen werden. Dazu kann das Segment 13 mit zwei trapezartig gestalteten vorstehenden Ansätzen 17a, 17b versehen werden, die in entsprechende Ausnehmungen 18a, 18 des Segments 14 eingreifen. Die Erfindung schließt weiterhin alle dem Fachmann bekannten formschlüssigen Verbindungen zwischen den Segmenten 13, 14 des Topfteils 12 ein. Das Topfteil 12 ist an der von der Hülse 10 abgewandten Seite mit einer umfangsbegrenzten radial nach außen gerichteten Profilierung 29 versehen. Mit der Profilierung 29 ist eine formschlüssige Verbindung zu einem Rastierring 28 geschaffen, der das Topfteil 12 umschließt.

Die Figur 6 zeigt die Rastierhülse 3b im Querschnitt entlang der Linie VI-VI gemäß Figur 2. Diese Schnittdarstellung zeigt das aus zwei Segmenten 13, 14 gebildete Topfteil 12a. Die halbkreisförmig gestalteten Segmente 13, 14 sind an diametral gegenüberliegenden Trennebenen 25a, 25b vorzugsweise durch eine Schweißung miteinander befestigt.

### Bezugszeichen

- 1: Getriebegehäuse
- 2: Schaltwelle
- 3a: Rastierhülse
- 3b: Rastierhülse
- 3c: Rastierhülse
- 3d: Rastierhülse
- 4: Schaltfinger
- 5: Schaltführung
- 6: Rastierung
- 7: Rastausnehmung
- 8: Schaltarretierung
- 9: Rastkugel
- 10: Hülse
- 10a: Hülse
- 11: Scheibe
- 12: Topfteil
- 12a: Topfteil
- 12b: Topfteil
- 13: Segment
- 14: Segment
- 15: Trennebene
- 16: Längsachse
- 17a: Ansatz
- 17b: Ansatz
- 18a: Ausnehmung
- 18b: Ausnehmung
- 19: Rampe
- 20: Schaltführung
- 21: Anschlagnocken
- 22: Achse
- 23: Sperrklinke
- 24: Bord
- 25a: Trennebene
- 25b: Trennebene
- 26: Abschnitt
- 27: Abschnitt
- 28: Rastierring
- 29: Profilierung
- 30: Trennebene

## Patentansprüche

1. Rastierhülse für eine Schaltwelle (2) eines mechanisch schaltbaren Zahnräderwechselgetriebes von Fahrzeugen, zur Sicherung von Verstellpositionen der Schaltwelle (2), wobei die Rastierhülse (3a bis 3d) mehrteilig aufgebaut ist und eine drehfest auf der Schaltwelle (2) befestigte Hülse (10; 10a) umfaßt, mit einer separaten Scheibe (11) oder einer einteilig an der Hülse befestigten Scheibe, die einen radialen Abstand zu einem die Schaltwelle (2) koaxial umschließenden Topfteil (12 bzw. 12a bzw. 12b) überbruckt, und wobei das als ein Spanlosteil gestaltete Topfteil mit zumindest einem Übertragungsteil bzw. Übertragungselement versehen ist, das mit einem der Schaltwelle (2) nebengeordneten Bauteil zusammenwirkt, **dadurch gekennzeichnet, dass** das Topfteil aus einem Bandmaterial gefertigt ist, das weitestgehend zylindrisch gerollt und deren Enden an einer in Richtung einer Längsachse (16) der Rastierhülse verlaufenden Trennebene (15) verbunden sind.

2. Rastierhülse für eine Schaltwelle (2) eines mechanisch schaltbaren Zahnräderwechselgetriebes von Fahrzeugen, zur Sicherung von Verstellpositionen der Schaltwelle (2) mit den Merkmalen des Oberbegriffs von Anspruch 1, **dadurch gekennzeichnet, dass** das Topfteil zumindest zwei Bauteile (13, 14) umfasst, die in einem Trennbereich miteinander verbunden sind.

3. Rastierhülse nach Anspruch 1, wobei ein Ende des Topfteils (12) an der Trennebene (15) mit zumindest einem Hinterschneidungen ausweisenden vorstehenden Ansatz (17a, 17b) versehen ist, der in eine, der Formgebung des Ansatzes (17a, 17b) entsprechende Ausnehmung (18a, 18b) des zugehörigen weiteren Endes des Topfteils (12) formschlüssig eingreift (Figur 1).

4. Rastierhülse nach Anspruch 2, wobei das Topfteil (12a) aus zwei Segmenten (13, 14) gebildet ist, die an Trennebenen (25a, 25b) miteinander befestigt sind (Figur 6).

5. Rastierhülse nach Anspruch 1 oder nach Anspruch 2, wobei das Topfteil (12b) zwei in axialer Richtung angeordnete Abschnitte (26, 27) umfaßt, die unlösbar miteinander verbunden sind und deren Trennebene (30) rechtwinkelig zu der Längsachse (16) der Rastierhülse (3c) verläuft (Figur4).

6. Rastierhülse nach Anspruch 1 oder nach Anspruch 2, wobei das Übertragungselement separat und radial aus der Mantelfläche des Topfteils (12, 12b) ausgerichtet ist.

7. Rastierhülse nach Anspruch 6, wobei das Übertragungselement als Schaltfinger (4) ausgebildet und spanlos hergestellt ist, der in eine der Schaltwelle (2) benachbart angeordneten Schaltkulisse eingreift (Figur 1).

8. Rastierhülse nach Anspruch 6, wobei das Topfteil (12) einen Anschlagnocken (21) für eine separat zu der Schaltwelle (2) angeordnete Sperreinheit aufweist (Figur 1).

9. Rastierhülse nach Anspruch 6, deren Topfteil (12a) mit einer Achse (22) zur Aufnahme einer drehbar angeordneten Sperrklinke (23) versehen ist, die als eine Rückwärtsgangsperre vorgesehen ist (Figur 2).

10. Rastierhülse nach Anspruch 1 oder nach Anspruch 2, wobei in eine Mantelfläche des Topfteils (12, 12a, 12b) eine Rastausnehmung (7) oder eine Rampe (19) spanlos eingeformt ist, die vorzugsweise für eine separate im Getriebegehäuse (1) eingesetzte Schaltarretierung (8) bestimmt ist.

11. Rastierhülse nach Anspruch 1 oder nach Anspruch 2, wobei in die Mantelfläche des Topfteils eine Schaltführung (5) eingebracht ist (Figur 1, Figur 2).

12. Rastierhülse nach Anspruch 1, mit einem separaten, koaxial zum Topfteil (12a) angeordneten und an diesem drehstarr befestigten Rastierring (28) (Figur 5).

13. Rastierhülse nach Anspruch 12, wobei der Rastierring (28) über eine Profilierung (29) formschlüssig mit dem Topfteil (12) verbunden ist.

14. Rastierhülse nach Anspruch 12, wobei der Rastierring (28) durch Kleben, Schweißen, Verprägen, Nieten oder mittels eines Preßsitzes an dem Topfteil (12) fixiert ist.

## Claims

1. Locking bush for a gearshift shaft (2) of a mechanical variable speed gearbox of vehicles, for securing adjusting positions of the gearshift shaft (2), the locking bush (3a to 3d) having a multi-piece configuration and comprising a bushing (10; 10a) fixed in rotation to the gearshift shaft (2), the locking bush further comprising a separate disk (11) or a disk fixed integrally to the bushing, which disk bridges a radial distance to a pot element (12 or 12a or 12b) that surrounds the gearshift shaft (2) coaxially, the pot element made as a non-chipped part comprising at least one transfer part or transfer element that cooperates with a component arranged next to the gearshift shaft (2), **characterised in that** the pot element is made of a strip material that is rolled substantially into a cylindrical shape and whose ends are connected in a parting plane (15) that extends in the direction of a longitudinal axis (16) of the locking bush.

2. Locking bush for a gearshift shaft (2) of a mechanical variable speed gearbox of vehicles, for securing adjusting positions of the gearshift shaft (2), having the features of the generic part of claim 1, **characterised in that** the pot element comprises at least two parts (13, 14) that are connected to each other in a parting region.

3. Locking bush according to claim 1, wherein one end of the pot element (12) is provided at the parting plane (15) with at least one projecting extension (17a, 17b) comprising undercuts, which extension engages positively into a recess (18a, 18b) that is arranged on the associated other end of the pot element (12) and corresponds to the shape of the extension (17a, 17b) (Fig. 1).

4. Locking bush according to claim 2, wherein the pot element (12a) is formed out of two segments (13, 14) that are fixed to each other in parting planes (25a, 25b) (Fig. 6).

5. Locking bush according to claim 1 or according to claim 2, wherein the pot element (12b) comprises two sections (26, 27) arranged in axial direction that are inseparably connected to each other and whose parting plane (30) extends at a right angle to the longitudinal axis (16) of the locking bush (3c) (Fig. 4).

6. Locking bush according to claim 1 or according to claim 2, wherein the transfer element is oriented separately and radially out of the outer peripheral surface of the pot element (12, 12b).

7. Locking bush according to claim 6, wherein the transfer element is configured as a shift finger (4) that is made without chip removal and engages into a shift channel arranged adjacent the gearshift shaft (2) (Fig. 1).

8. Locking bush according to claim 6, wherein the pot element (12) comprises a stop cam (21) for a locking unit arranged separately from the gearshift shaft (2) (Fig. 1).

9. Locking bush according to claim 6 whose pot element (12a) comprises an axle (22) for receiving a pivotally mounted click (23) that serves as a reverse gear lock (Fig. 2).

10. Locking bush according to claim 1 or according to claim 2, wherein a catch recess (7) or a ramp (19) is made without chip removal in an outer peripheral surface of the pot element (12, 12a, 12b) and is preferably intended for a separate gearshift lock (8) inserted into the gearbox casing (1).

11. Locking bush according to claim 1 or according to claim 2, wherein a shift guide (5) is made in the outer peripheral surface of the pot element (Fig. 1, Fig. 2).

12. Locking bush according to claim 1 having a separate locking ring (28) that is arranged coaxially to the pot element (12a) and fixed in rotation thereto (Fig. 5).

13. Locking bush according to claim 12, wherein the locking ring (28) is interlocked with the pot element (12) through a profile (29).

14. Locking bush according to claim 12, wherein the locking ring (28) is fixed on the pot element (12) by gluing, welding, stamping, riveting or by means of an interference fit.

## Revendications

1. Manchon d'immobilisation pour un arbre de commande (2) d'une boîte de vitesse à pignons à commutation mécanique équipant des véhicules automobiles, pour fixer les positions de réglage de l'arbre de commutation (2), selon lequel
le manchon d'immobilisation (3a-3d) formé de plusieurs parties comprend un manchon (10, 10a) fixé solidairement sur l'arbre de commande (2), avec un disque séparé (11) ou un disque fixé en une seule pièce au manchon, qui surpasse une distance radiale vers une pièce en forme de pot (12, 12a, 12b) entourant coaxialement l'arbre de commande (2), et
la pièce en forme de pot réalisée par un usinage sans enlèvement de copeaux, comporte au moins une pièce de transmission ou un élément de transmission coopérant avec un composant placé à côté de l'arbre de commande (2),
**caractérisé en ce que**
la pièce en forme de pot est fabriquée dans un matériau en forme de ruban que l'on enroule sous une forme cylindrique et dont les extrémités sont reliées au niveau d'un plan de séparation (15) passant par l'axe longitudinal (16) du manchon d'immobilisation.

2. Manchon d'immobilisation pour un arbre de commande (2) d'une boîte de vitesses à pignons dentés à commutation mécanique équipant des véhicules, pour fixer les positions de commutation de l'arbre de commande (2), selon les caractéristiques du préambule de la revendication 1,
**caractérisé en ce que**
la pièce en forme de pot comprend au moins deux parties (13, 14) reliées l'une à l'autre dans une zone de séparation.

3. Manchon d'immobilisation selon la revendication 1,
**caractérisé en ce qu'**
une extrémité de la pièce en forme de pot (12) est munie au niveau du plan de séparation (15) d'au moins un prolongement (17a, 17b) en saillie muni de parties en contre dépouille destinées à pénétrer par une liaison de forme dans une découpe (18a, 18b) correspondante de l'autre extrémité de la pièce en forme de pot (12) (figure 1).

4. Manchon d'immobilisation selon la revendication 2,
dans lequel
la pièce en forme de pot (12a) se compose de deux segments (13, 14) fixés l'un à l'autre au niveau de plans de séparation (25a, 25b) (figure 6).

5. Manchon d'immobilisation selon la revendication 1 ou la revendication 2,
la pièce en forme de pot (12b) comprenant deux segments (26, 27) disposés dans la direction axiale et reliés solidairement l'un à l'autre, le plan de jonction (30) étant perpendiculaire à l'axe longitudinal (16) du manchon d'immobilisation (3c) (figure 4).

6. Manchon d'immobilisation selon la revendication 1 ou la revendication 2,
dans lequel
l'élément de transmission est distinct et vient radialement en saillie par rapport à la surface enveloppe de la pièce en forme de pot (12, 12b).

7. Manchon d'immobilisation selon la revendication 6,
dans laquelle
l'élément de transmission est en forme de doigt de commutation (4) fabriqué par usinage sans enlèvement de copeaux et qui pénètre dans une coulisse de commutation voisine de l'arbre de commande (2) (figure 1).

8. Manchon d'immobilisation selon la revendication 6,
**caractérisé en ce que**
la pièce (12) en forme de pot comporte une came de butée (21) pour un verrou distinct de l'arbre de commutation (2) (figure 1).

9. Manchon d'immobilisation selon la revendication 6,
dont la pièce en forme de pot (12a) est munie d'un axe (22) pour recevoir un verrou (23) monté à rotation et servant de verrou d'interdiction de la marche arrière (figure 2).

10. Manchon d'immobilisation selon la revendication 1 ou la revendication 2,
**caractérisé en ce qu'**
une surface enveloppe de la pièce en forme de pot (12, 12a, 12b) comporte une cavité d'immobilisation (7) ou une rampe (19) formées par usinage sans enlèvement de copeaux, et destinées de préférence à un moyen d'immobilisation (8) installé séparément dans la boîte de vitesses (1).

11. Manchon d'immobilisation selon la revendication 1 ou la revendication 2,
dans laquelle
la surface enveloppe de la pièce en forme de pot reçoit un guide de commutation (5) (figure 1, figure 2).

12. Manchon d'immobilisation selon la revendication 1,
comportant
une bague d'immobilisation (28) séparée, installée coaxialement à la pièce en forme de pot (12a) et fixée rigidement en rotation à celle-ci (figure 5).

13. Manchon d'immobilisation selon la revendication 12,
dans laquelle
la bague d'immobilisation (28) est reliée à la pièce en forme de pot (12) par une liaison de forme par un profil (29).

14. Manchon d'immobilisation selon la revendication 12,
dans laquelle
la bague d'encliquetage (28) est bloquée sur la pièce en forme de pot (12) par collage, soudage, matriçage, rivetage ou par un siège pressé.
